# EUROPEAN PATENT APPLICATION

(11) **EP 4 740 743 A1**
(43) Date of publication of application: **13.05.2026**
(21) Application number: 24835802.0
(22) Date of filing: 22.05.2024
(51) Int. Cl.: A23K 20/142, A23K 50/75

(54) **FEED ADDITIVE AND LIVESTOCK FEED**

(30) Priority: 03.07.2023 JP 2023109335
(71) Applicant: Sumitomo Chemical Company, Limited, Tokyo 103-6020 (JP)
(72) Inventor: TONOUE, Tsuyoshi, Tokyo 103-6020 (JP); MATSUI, Daisuke, Libertyville, Illinois 60048 (US)
(74) Representative: Vossius & Partner Patentanwälte Rechtsanwälte mbB
(86) International application number: PCT/JP2024/018809
(87) International publication number: WO 2025/009281

(57) **Abstract**

A feed additive contains a methionine hydroxy analog and/or a calcium salt thereof, methionine and/or a salt thereof, and guanidinoacetic acid and/or a salt thereof. A livestock feed contains a methionine hydroxy analog and/or a calcium salt thereof, methionine and/or a salt thereof, guanidinoacetic acid and/or a salt thereof, and a basic feed.

## Description

### [Technical Field]

The present invention relates to a feed additive and a livestock feed, and it also relates to a method of rearing livestock by using a livestock feed, as well as a method of improving a weight gain and a feed conversion ratio in livestock.

### [Background Art]

Methionine is an essential amino acid that is not synthesized in the body of animals, and it is known to be used as an additive to add to feed for livestock and the like.

Creatine, which is one of amino acids, is found in the body of animals and serves as a source of energy for movements. Creatine is produced by methylation of its precursor, guanidinoacetic acid. Guanidinoacetic acid is a source of creatine, so its use as a feed additive is suggested (Japanese National Patent Publication No. 2008-501352 (PTL 1), for example).

### [CITATION LIST]

### [PATENT LITERATURE]

[PTL 1] Japanese National Patent Publication No. 2008-501352

### [SUMMARY OF THE INVENTION]

### [PROBLEMS TO BE SOLVED BY THE INVENTION]

Feed additives and livestock feeds are required to achieve an excellent weight gain and an excellent feed conversion ratio.

An object of the present invention is to provide a feed additive and a livestock feed that are capable of improving a weight gain and a feed conversion ratio in livestock.

### [MEANS FOR SOLVING THE PROBLEMS]

The present invention provides a feed additive, a livestock feed, a method of rearing livestock, as well as a method of improving a weight gain and a feed conversion ratio in livestock, which are described below.
[1] A feed additive containing:
   a methionine hydroxy analog and/or a calcium salt thereof;
   methionine and/or a salt thereof; and
   guanidinoacetic acid and/or a salt thereof.
[2] The feed additive according to [1], further containing a carrier.
[3] The feed additive according to [2], wherein
   the carrier includes a solid carrier, and
   the solid carrier supports the methionine hydroxy analog.
[4] A livestock feed containing:
   a methionine hydroxy analog and/or a calcium salt thereof;
   methionine and/or a salt thereof;
   guanidinoacetic acid and/or a salt thereof; and
   a basic feed.
[5] The livestock feed according to [4], further containing a carrier.
[6] The livestock feed according to [5], wherein
   the carrier includes a solid carrier, and
   the solid carrier supports the methionine hydroxy analog.
[7] A method of rearing livestock, including feeding livestock with the livestock feed according to any one of [4] to [6].
[8] The method of rearing according to [7], wherein the livestock are poultry.
[9] A method of improving a weight gain and a feed conversion ratio in livestock, the method including feeding livestock with the livestock feed according to any one of [4] to [6].
[10] The method according to [9], wherein the livestock are poultry.

### [EFFECTS OF THE INVENTION]

The present invention makes it possible to provide a feed additive and a livestock feed that are capable of improving a weight gain and a feed conversion ratio in livestock.

### [MODE FOR CARRYING OUT THE INVENTION]

### (Feed Additive)

A feed additive according to the present invention (hereinafter also called "the present feed additive") contains a methionine hydroxy analog and/or a calcium salt thereof (hereinafter also called "LMA"), methionine and/or a salt thereof (hereinafter also called "DLM"), and guanidinoacetic acid and/or a salt thereof (hereinafter also called "GAA").

LMA may be a methionine hydroxy analog, or may be a calcium salt of a methionine hydroxy analog, or may be a mixture of these. The methionine hydroxy analog may be a D-form, or may be an L-form, or may be a mixture of these. The calcium salt of a methionine hydroxy analog may be a D-form, or may be an L-form, or may be a mixture of these. LMA is preferably a methionine hydroxy analog.

DLM may be methionine, or may be a salt of methionine, or may be a mixture of these. The salt of methionine is preferably a sodium salt. Methionine may be L-methionine, or may be D-methionine, or may be a mixture of these. DLM is preferably L-methionine and/or DL-methionine.

GAA may be guanidinoacetic acid, or may be a salt of guanidinoacetic acid, or may be a mixture of these. Examples of the salt of guanidinoacetic acid include a hydrochloric acid salt of guanidinoacetic acid, a hydrobromic acid salt of guanidinoacetic acid, and a phosphoric acid salt of guanidinoacetic acid. GAA is preferably guanidinoacetic acid.

By containing LMA, DLM, and GAA, the present feed additive is capable of improving the weight gain and the feed conversion ratio (FCR) in livestock. As compared to when only one of LMA and DLM is used or when one of LMA and DLM in combination with GAA are used, the present feed additive is capable of improving the weight gain and the feed conversion ratio in livestock.

The mass ratio between LMA and DLM (LMA/DLM) in the present feed additive may be 0.05 or more, or may be 0.1 or more, or may be 0.3 or more, or may be 0.5 or more. The LMA/DLM may be 10.0 or less, or may be 5.0 or less, or may be 3.0 or less, or may be 2.0 or less. The LMA/DLM may be from 0.05 to 10.0, or may be from 0.1 to 5.0, or may be from 0.3 to 3.0, or may be from 0.5 to 2.0. In this description, when LMA includes two or more of the above-mentioned components, the mass of LMA refers to the total amount of them. In this description, when DLM includes two or more of the above-mentioned components, the mass of DLM refers to the total amount of them.

The content of GAA in the present feed additive may be 5 mass% or more, or may be 10 mass% or more, or may be 15 mass% or more, or may be 18 mass% or more, relative to the total amount of LMA and DLM. The content of GAA in the present feed additive may be 50 mass% or less, or may be 40 mass% or less, or may be 30 mass% or less, or may be 25 mass% or less, relative to the total amount of LMA and DLM. The content of GAA in the present feed additive may be from 5 mass% to 50 mass%, or may be from 10 mass% to 40 mass%, or may be from 15 mass% to 40 mass%, or may be from 15 mass% to 30 mass%, or may be from 15 mass% to 25 mass%, or may be from 18 mass% to 30 mass%, or may be from 18 mass% to 25 mass%, relative to the total amount of LMA and DLM.

The content of LMA relative to the total amount of LMA, DLM, and GAA in the present feed additive which is defined as 100 mass% (hereinafter also called "the content of LMA in the present feed additive") may be 5 mass% or more, or may be 10 mass% or more, or may be 15 mass% or more, or may be 20 mass% or more, or may be 25 mass% or more, or may be 30 mass% or more, or may be 35 mass% or more. The content of LMA in the present feed additive may be 75 mass% or less, or may be 55 mass% or less, or may be 45 mass% or less. The content of LMA in the present feed additive may be from 5 mass% to 75 mass%, or may be from 10 mass% to 55 mass%, or may be from 15 mass% to 45 mass%, or may be from 20 mass% to 45 mass%, or may be from 25 mass% to 45 mass%, or may be from 30 mass% to 45 mass%, or may be from 35 mass% to 45 mass%.

The content of DLM relative to the total amount of LMA, DLM, and GAA in the present feed additive which is defined as 100 mass% (hereinafter also called "the content of DLM in the present feed additive") may be 5 mass% or more, or may be 10 mass% or more, or may be 15 mass% or more, or may be 20 mass% or more, or may be 25 mass% or more, or may be 30 mass% or more, or may be 35 mass% or more. The content of DLM in the present feed additive may be 75 mass% or less, or may be 55 mass% or less, or may be 45 mass% or less. The content of DLM in the present feed additive may be from 5 mass% to 75 mass%, or may be from 10 mass% to 55 mass%, or may be from 15 mass% to 45 mass%, or may be from 20 mass% to 45 mass%, or may be from 25 mass% to 45 mass%, or may be from 30 mass% to 45 mass%, or may be from 35 mass% to 45 mass%.

The content of GAA relative to the total amount of LMA, DLM, and GAA in the present feed additive which is defined as 100 mass% (hereinafter also called "the content of GAA in the present feed additive") may be 5 mass% or more, or may be 10 mass% or more, or may be 15 mass% or more. The content of GAA in the present feed additive may be 45 mass% or less, or may be 35 mass% or less, or may be 25 mass% or less. The content of GAA in the present feed additive may be from 5 mass% to 45 mass%, or may be from 10 mass% to 35 mass%, or may be from 15 mass% to 25 mass%.

The total amount of LMA, DLM, and GAA in the present feed additive may be 15 mass% or more, or may be 20 mass% or more, or may be 30 mass% or more, or may be 50 mass% or more, or may be 80 mass% or more, or may be 90 mass% or more, or may be 95 mass% or more. The total amount of LMA, DLM, and GAA in the present feed additive is 100 mass% or less, and it may be 95 mass% or less, or may be 90 mass% or less, or may be 80 mass% or less, or may be 70 mass% or less, or may be 60 mass% or less, or may be 50 mass% or less, or may be 40 mass% or less. The total amount of LMA, DLM, and GAA in the present feed additive may be from 15 mass% to 100 mass%, or may be from 20 mass% to 90 mass%, or may be from 30 mass% to 80 mass%, or may be from 50 mass% to 70 mass%, or may be from 20 mass% to 100 mass%, or may be from 80 mass% to 100 mass%, or may be from 90 mass% to 100 mass%, or may be from 95 mass% to 100 mass%, or may be from 50 mass% to 95 mass%, or may be from 50 mass% to 60 mass%, or may be from 20 mass% to 40 mass%, or may be from 30 mass% to 50 mass%, or may be from 30 mass% to 40 mass%.

The present feed additive may further contain a carrier. The carrier to be contained in the present feed additive may be those that formulate the present feed additive into powder, granules, or the like, or those that formulate LMA, DLM, and/or GAA. As the carrier, an excipient substance that is used in the art may be mentioned. Examples of solid carriers include lactose, sucrose, glucose, dextrin, corn starch, corn powder, gelatin, casein, starch, gum arabic, cellulose derivatives such as ethylcellulose, alginic acid, rice husks, diatomaceous earth, silicic anhydride, anhydrous silicates, light silicic anhydride, silicic acid, silicates, hydrous silicon dioxide, hydrous amorphous silicon oxide, talc, vermiculite, kaolin, perlite, bentonite, zeolite, and calcium carbonate.

In the case where LMA to be contained in the present feed additive includes a methionine hydroxy analog, the present feed additive preferably includes a solid carrier. By supporting methionine hydroxy analog on the solid carrier, the methionine hydroxy analog can be solidified. This can enhance the handling.

In the case where the methionine hydroxy analog is to be supported on the carrier, the carrier is preferably an inorganic carrier. The particle size of the carrier is preferably from 1 µm to 2000 µm, more preferably from 5 µm to 1000 µm, more preferably from 10 µm to 850 µm, further preferably from 50 µm to 710 µm, and an inorganic carrier with the diameter of from 100 µm to 500 µm is further preferable. The carrier is preferably one or more carriers selected from the group consisting of diatomaceous earth, silicic anhydride, anhydrous silicate, light silicic anhydride, silicic acid, silicates, hydrous silicon dioxide, hydrous amorphous silicon oxide, zeolite, and perlite, and more preferably, it is zeolite. As the zeolite, MINE ZEON (manufactured by Nitto Funka Kogyo) and/or the like can be used. In this description, the particle size refers to the modal diameter in mass-based particle size distribution obtained by a sieving method.

In the preparation of the present feed additive, when spray drying is carried out, the carrier may be either an organic carrier or an inorganic carrier. Examples of the organic carrier include sugars such as lactose, starches (including starch degradation products), dextrin, cyclodextrin, sucrose, maltose, glucose, ethylcellulose, gum arabic, xanthan gum, guar gum, and gum tragacanth; sugar alcohols such as maltitol, erythritol, xylitol, sorbitol, mannitol, lactitol, trehalose, and reduced palatinose; and corn starch. Examples of the inorganic carrier include sodium chloride, silicic anhydride, anhydrous silicates, light silicic anhydride, silicic acid, silicates, hydrous silicon dioxide, hydrous amorphous silicon oxide, calcium sulfate, calcium hydrogen phosphate, and the like. One or more organic carriers selected from the group consisting of lactose, dextrin, ethylcellulose, and corn starch are preferable, and dextrin is further preferable. One of them may be used alone, or a combination of them may be used. The sugar alcohol may be either an anhydride or a hydrate. In the case where the present feed additive is prepared by spray drying, carriers are not necessary.

In the case where the methionine hydroxy analog is supported on the carrier, the content of the carrier in the present feed additive may be 5 mass% or more, or may be 10 mass% or more, or may be 15 mass% or more, or may be 50 mass% or less, or may be 45 mass% or less, or may be 40 mass% or less. In the case where the methionine hydroxy analog is supported on the carrier, the content of the carrier in the present feed additive may be from 5 mass% to 50 mass%, or may be from 10 mass% to 45 mass%, or may be from 15 mass% to 40 mass%.

In the case where the present feed additive is prepared by spray drying, the present feed additive may or may not include a carrier. In the case where the present feed additive includes a carrier, the content of the carrier in a suspension that is used for preparing the present feed additive by spray drying may be 5 mass% or less, or may be 3 mass% or less, or may be 2 mass% or less, or may be 1 mass% or less.

The present feed additive may include one or more other components such as proteins, vitamins (such as vitamin A, vitamin B1, vitamin B2, vitamin B6, vitamin B12, vitamin D, vitamin E, calcium pantothenate, nicotinamide, and folic acid), and trace inorganic salts (such as magnesium sulfate, iron sulfate, copper sulfate, zinc sulfate, potassium iodide, and cobalt sulfate). The present feed additive may include one or more additives such as an antioxidant, an antimicrobial agent, a fungicide, an anthelmintic, a flavoring agent, a coloring agent, a taste-imparting agent, an enzyme, and the like.

The present feed additive can be produced by mixing LMA, DLM, and GAA together. The mixing of LMA, DLM, and GAA may be carried out by adding all the three components into a mixing vessel, or may be carried out by firstly mixing two of the three components together and then mixing the remaining one with the resulting mixture. In the case where the present feed additive includes a carrier, other components, and/or an additive, each of them may be mixed in at a proper timing. For example, components which are to be included in the present feed additive, except for the carrier, may be firstly mixed together and then the carrier may be mixed with the resulting mixture, or a particular component which is to be included in the present feed additive may be firstly mixed with the carrier and then the other components may be mixed with the resulting mixture.

In the case where LMA includes a methionine hydroxy analog, it is preferable to make the methionine hydroxy analog supported on a solid carrier to solidify it. In this case, the solidified methionine hydroxy analog can be mixed with the other components of the present feed additive to thereby produce the present feed additive. As mentioned above, when it is in a solidified state, the methionine hydroxy analog can be handled better and thereby can be readily mixed with DLM and GAA in a uniform fashion. In the case where the pre-solidified methionine hydroxy analog, DLM, and GAA are mixed together to prepare the present feed additive including LMA, DLM, GAA, and the carrier, there is no particular limitation to the method and/or the apparatus, and a technique that is known in the technical field to which the present invention pertains can be employed. Examples of the method include typical preparation methods that involve pulverization, mixing, granulation, and/or the like. As the apparatus, a roller mill, a jet mill, a hammer mill, a pin mill, a W-type mixer, a V-type mixer, a drum-type mixer, a ribbon-type mixer, a paddle-type mixer, a conical screw-type mixer, a fluidized bed granulation dryer, a stirring granulation dryer, and/or the like is widely used. From the viewpoint of supporting the methionine hydroxy analog, the particle size of the carrier may be from 10 µm to 2000 µm, or may be from 50 µm to 1000 µm, or may be from 100 µm to 850 µm, or may be from 150 µm to 710 µm, or may be from 180 µm to 600 µm, or may be from 210 µm to 500 µm. From the viewpoint of facilitating the uniform mixing of the methionine hydroxy analog supported on the carrier, the particle size of each of DLM and GAA may be independently from 5 µm to 1000 µm, or may be from 50 µm to 810 µm, or may be from 100 µm to 850 µm, or may be from 150 µm to 710 µm, or may be from 180 µm to 600 µm, or may be from 210 µm to 500 µm.

In the case where the methionine hydroxy analog is supported on the carrier, the mass ratio (carrier/(methionine hydroxy analog)) may be, for example, from 0.1 to 30.0, or may be from 0.5 to 20.0, or may be from 1.0 to 15.0, or may be from 2.0 to 10.0, or may be from 2.0 to 5.0.

In the case where the present feed additive including the carrier is prepared by spray drying, DLM, GAA, and the carrier are pulverized and mixed together into uniformity, and then LMA diluted with a solvent such as water is added thereto, and then a suspension including DLM, GAA, LMA, and the carrier is prepared while the temperature is being raised. The resulting suspension can be spray dried while warmed and stirred, and thereby the present feed additive including the carrier can be obtained.

The present feed additive can be fed to livestock as it is, or as a livestock feed prepared by mixing it with a basic livestock feed as described below. The amount thereof fed to livestock may be determined so as to meet the methionine requirement for the livestock. The present feed additive may be fed throughout the entire rearing period for the livestock, or may be fed during a particular period in the rearing period.

The livestock to which the present feed additive is fed may be poultry such as chickens (chickens that are reared for meat, egg-laying hens), ducks, quails, domestic ducks, geese, doves, turkeys, and ostriches; mammals such as cows, goats, horses, camels, buffalos, pigs, and sheep; and the like. The livestock are preferably poultry, more preferably chickens.

### (Livestock Feed)

A livestock feed according to the present invention (hereinafter also called "the present livestock feed") includes LMA, DLM, GAA, and a basic feed. In other words, the present livestock feed can include the present feed additive and a basic feed. The livestock feed may further include a carrier. The details of the components that are included in the present livestock feed and the present feed additive, such as LMA, DLM, GAA, and the carrier, are as described above.

The basic feed is a feed composition that can be combined with the present feed additive, and is not particularly limited as long as it is generally used as a livestock feed. Examples of feed raw materials included in the basic feed include corn, rice, crops such as barley and wheat, milo, grain sorghum, soybean meal, rapeseed meal, bran, defatted rice bran, fish meal, skim milk powder, dry whey, alfalfa meal, Hokuyo fish meal, soybean oil, palm oil, coconut oil, rapeseed oil, safflower oil, corn oil, cottonseed oil, animal oils/fats (such as meat meal, chicken meal, lard, and beef tallow), wheat flour, meat-and-bone meal (feather meal), calcium phosphate, corn gluten meal, corn distillers grain soluble, corn jam meal, molasses, calcium carbonate, tricalcium phosphate, sodium chloride, choline chloride, vitamins (such as vitamin A, vitamin B1, vitamin B2, vitamin B6, vitamin B12, vitamin D, vitamin E, calcium pantothenate, nicotinamide, and folic acid), amino acids other than LMA and DLM (such as lysine and threonine), trace inorganic salts (such as magnesium sulfate, iron sulfate, copper sulfate, zinc sulfate, potassium iodide, cobalt sulfate, and selenium compounds), organic acids (such as formic acid, fumaric acid, propionic acid, and butyric acid), enzymes (such as phytase), direct fed microbials, prebiotics, inactivated microbials, and the like.

The present livestock feed is capable of improving the weight gain and the feed conversion ratio in livestock since it includes LMA, DLM, and GAA. The livestock to which the present livestock feed is fed may be the above-mentioned types of livestock.

The contents of LMA, DLM, and GAA in the present livestock feed may be determined based on the component composition of the basic feed, so as to meet the methionine requirement for the livestock. It is normally the case that the component composition of the basic feed is adjusted to suit the growth stage of the livestock, so the contents of LMA, DLM, and GAA may be adjusted to suit the component composition of the basic feed into which LMA, DLM, and GAA (or the present feed additive) are to be blended.

The content of LMA in the present livestock feed may be from 0.01 mass% to 3.00 mass%, or may be from 0.02 mass% to 2.50 mass%, or may be from 0.03 mass% to 2.00 mass%, or may be from 0.05 mass% to 1.00 mass%, for example. The content of DLM in the present livestock feed may be from 0.01 mass% to 4.00 mass%, or may be from 0.03 mass% to 3.00 mass%, or may be from 0.05 mass% to 2.00 mass%, or may be from 0.10 mass% to 1.00 mass%, for example. The content of GAA in the present livestock feed may be from 0.01 mass% to 2.00 mass%, or may be from 0.01 mass% to 1.50 mass%, or may be from 0.02 mass% to 1.00 mass%, or may be from 0.03 mass% to 0.50 mass%, for example.

The mass ratio between LMA and DLM (LMA/DLM) in the present livestock feed may be 0.05 or more, or may be 0.1 or more, or may be 0.3 or more, or may be 0.5 or more. The LMA/DLM may be 10.0 or less, or may be 5.0 or less, or may be 3.0 or less, or may be 2.0 or less. The LMA/DLM may be from 0.05 to 10.0, or may be from 0.1 to 5.0, or may be from 0.3 to 3.0, or may be from 0.5 to 2.0.

The content of GAA in the present livestock feed may be 5 mass% or more, or may be 10 mass% or more, or may be 15 mass% or more, or may be 18 mass% or more, relative to the total amount of LMA and DLM. The content of GAA in the present livestock feed may be 50 mass% or less, or may be 40 mass% or less, or may be 30 mass% or less, or may be 25 mass% or less, relative to the total amount of LMA and DLM. The content of GAA in the present livestock feed may be from 5 mass% to 50 mass%, or may be from 10 mass% to 40 mass%, or may be from 15 mass% to 40 mass%, or may be from 15 mass% to 30 mass%, or may be from 15 mass% to 25 mass%, or may be from 18 mass% to 30 mass%, or may be from 18 mass% to 25 mass%, relative to the total amount of LMA and DLM.

The present livestock feed may be produced by mixing LMA, DLM, GAA, and the basic feed together, or may be produced by mixing the present feed additive and the basic feed together, or may be produced by mixing together LMA, DLM, GAA, and a feed raw material constituting the basic feed. The mixing of LMA, DLM, GAA, and the basic feed (or the feed raw material) may be carried out after adding all these components into a mixing vessel, or may be carried out by sequentially adding the individual components into a mixing vessel to mix. In the case where the present livestock feed includes a methionine hydroxy analog, the methionine hydroxy analog already supported on the solid carrier and solidified may be mixed with the other components of the present livestock feed.

The present livestock feed may be fed to livestock. The present livestock feed can be used in a method of rearing livestock, and/or in a method of improving the weight gain and the feed conversion ratio in livestock. Each of the method of rearing livestock and the method of improving the weight gain and the feed conversion ratio in livestock includes a step to feed livestock with the present livestock feed. The present livestock feed can be used for improving the weight gain and the feed conversion ratio in livestock.

The amount of the present livestock feed to be fed to livestock may be determined so as to meet the methionine requirement for the livestock. The present livestock feed may be fed throughout the entire rearing period for the livestock, or may be fed during a particular period in the rearing period. In the case where the livestock are poultry, it is preferable to feed it throughout the entire rearing period for the poultry.

### [EXAMPLES]

In the following, a more specific illustration of the present invention is provided with reference to Examples, Comparative Examples, and the like, but these examples are not intended to limit the scope of the present invention.

Raw materials used in Test Example 1 and Test Example 2 are as follows:
DLM: DL-methionine (99% pure)
LMA: DL-form of methionine hydroxy analog (88% pure)
GAA: guanidinoacetic acid (96% pure)
Diatomaceous earth: Radiolite #200, Showa Chemical Industry Co., Ltd. Zeolite: MINE ZEON #7, Nitto Funka Kogyo K.K.
Perlite: Topco 5B, Showa Chemical Industry Co., Ltd.
Hydrous silicon dioxide: CARPLEX XR, Evonik company

### [Test Example 1]

### [Preparation of Basic Feed]

Raw materials were blended as specified in Table 1 to prepare basic feeds (1) to (3).

**[Table 1]**

| Feed raw material | Basic feed (1) [mass%] | Basic feed (2) [mass%] | Basic feed (3) [mass%] |
|---|---|---|---|
| Flaked corn | 50.26 | 53.33 | 55.51 |
| Grain sorghum | 2.00 | 3.00 | 4.00 |
| Soybean meal | 38.90 | 34.40 | 30.70 |
| Fish meal (crude protein (CP) 65%) | 3.00 | 2.50 | 2.00 |
| Animal oil/fat | 3.10 | 4.20 | 5.40 |
| Tricalcium phosphate | 1.25 | 1.15 | 1.05 |
| Calcium carbonate | 0.80 | 0.75 | 0.70 |
| Common salt | 0.20 | 0.20 | 0.25 |
| Vitamins/minerals premix*¹ | 0.30 | 0.30 | 0.25 |
| Choline chloride (60% preparation) | 0.06 | 0.06 | 0.06 |
| L-Lysine hydrochloride | 0.04 | 0.04 | 0.03 |
| L-Threonine | 0.06 | 0.04 | 0.02 |
| Selenium yeast (selenium, 1000 ppm) | 0.03 | 0.03 | 0.03 |
| Total | 100.00 | 100.00 | 100.00 |

| | | | |
|---|---|---|---|
| *1: Thiamine nitrate in 2.0 g/kg, riboflavin in 4.5 g/kg, pyridoxine hydrochloride in 2.0 g/kg, cyanocobalamine in 10.0 mg/kg, nicotinic acid in 30.0 g/kg, calcium D-pantothenate in 7.5 g/kg, d-biotin in 75.0 mg/kg, folic acid in 1.0 g/kg, vitamin A in 6,500,000 IU, vitamin D₃ in 2,500,000 IU, dl-α-tocopherol acetate in 40 mg/kg, vitamin K₃ in 3.836 g/kg, Mn in 50 g/kg, Zn in 50 g/kg, Fe in 20 g/kg, Cu in 7.5 g/kg, I in 0.5 g/kg | | | |

Metabolizable energy calculated from the component composition of the basic feeds (1) to (3), together with the contents of the components, are shown in Table 2 (calculated according to Standard Tables of Feed Composition in Japan (2009)). Table 2 also shows the ratio of the calculated metabolizable energy as well as the contents of the components to the requirements for broilers (Ross Nutrition Specification 2019).

**[Table 2]**

| Component | Basic feed (1) | | Basic feed (2) | | Basic feed (3) | |
|---|---|---|---|---|---|---|
| | Calculated value | Ratio vs. requirements [%] | Calculated value | Ratio vs. requirements [%] | Calculated value | Ratio vs. requirements [%] |
| Metabolizable energy [Mcal/kg] | 3002 | 100 | 3103 | 100 | 3202 | 100 |
| Crude protein [%] | 23.58 | 103 | 21.52 | 100 | 19.74 | 101 |
| Calcium [%] | 0.970 | 101 | 0.890 | 102 | 0.800 | 101 |
| Non-phytate phosphorus [%] | 0.490 | 102 | 0.440 | 101 | 0.400 | 101 |
| Methionine [%] | 0.370 | 66 | 0.330 | 65 | 0.310 | 66 |
| Digestable methionine [%] | 0.340 | 67 | 0.310 | 66 | 0.280 | 65 |
| Methionine + cystine [%] | 0.740 | 69 | 0.680 | 69 | 0.630 | 69 |
| Digestable methionine + cystine [%] | 0.650 | 68 | 0.600 | 69 | 0.560 | 70 |
| Digestable arginine [%] | 1.400 | 102 | 1.270 | 103 | 1.160 | 105 |
| Digestable isoleucine [%] | 0.860 | 100 | 0.780 | 100 | 0.710 | 100 |
| Digestable leucine [%] | 1.863 | 132 | 1.733 | 136 | 1.622 | 145 |
| Digestable lysine [%] | 1.280 | 100 | 1.150 | 100 | 1.030 | 100 |
| Digestable threonine [%] | 0.860 | 100 | 0.770 | 100 | 0.690 | 100 |
| Digestable tryptophan [%] | 0.250 | 125 | 0.230 | 128 | 0.210 | 131 |
| Digestable valine [%] | 0.960 | 100 | 0.870 | 100 | 0.800 | 103 |

### [Preparation of Feed Additive]

DLM, LMA, and GAA were mixed together in the proportion specified in Table 3 (1-6), (2-6), and (3-6) to prepare respective present feed additives.

### [Preparation of Livestock Feed]

The present feed additives thus prepared and the basic feeds (1) to (3) were mixed together in the proportion specified in Table 3 (1-6), (2-6), and (3-6) to prepare respective livestock feeds. The other livestock feeds listed in Table 3 were prepared by mixing DLM, LMA, GAA, and the basic feeds (1) to (3) together in the proportion specified in Table 3. The total content of DLM and LMA in the livestock feed was determined to be 98% of the total requirements of methionine and cystine for broilers (given in the row named "Digestable methionine + cystine" in Table 2).

For example, 997.2 kg of the basic feed (1) was placed in a tank of a ribbon mixer (RM-300, manufactured by Fuji Electric Co., Ltd.), and while it was mixed at a predetermined number of revolutions, 2.8 kg of DLM was added thereto, followed by another 10 minutes of mixing, and thereby 1,000 kg of a livestock feed (1-1) was obtained. Each of the other livestock feeds was also obtained in a desired amount by mixing in the same manner.

**[Table 3]**

| Livestock feed | Basic feed | | DLM | LMA | GAA | Total |
|---|---|---|---|---|---|---|
| | Type | Amount [mass % ] | Amount [mass%] | Amount [mass%] | Amount [mass%] | [mass%] |
| (1-1) | (1) | 99.72 | 0.28 | - | - | 100 |
| (1-2) | (1) | 99.68 | - | 0.32 | - | 100 |
| (1-3) | (1) | 99.66 | 0.28 | - | 0.06 | 100 |
| (1-4) | (1) | 99.62 | - | 0.32 | 0.06 | 100 |
| (1-5) | (1) | 99.70 | 0.19 | 0.11 | - | 100 |
| (1-6) | (1) | 99.64 | 0.19 | 0.11 | 0.06 | 100 |
| (2-1) | (2) | 99.74 | 0.26 | - | - | 100 |
| (2-2) | (2) | 99.71 | - | 0.29 | - | 100 |
| (2-3) | (2) | 99.68 | 0.26 | - | 0.06 | 100 |
| (2-4) | (2) | 99.65 | - | 0.29 | 0.06 | 100 |
| (2-5) | (2) | 99.73 | 0.13 | 0.14 | - | 100 |
| (2-6) | (2) | 99.67 | 0.13 | 0.14 | 0.06 | 100 |
| (3-1) | (3) | 99.77 | 0.23 | - | - | 100 |
| (3-2) | (3) | 99.75 | - | 0.25 | - | 100 |
| (3-3) | (3) | 99.71 | 0.23 | - | 0.06 | 100 |
| (3-4) | (3) | 99.69 | - | 0.25 | 0.06 | 100 |
| (3-5) | (3) | 99.75 | 0.08 | 0.17 | | 100 |
| (3-6) | (3) | 99.69 | 0.08 | 0.17 | 0.06 | 100 |

### (Test Animal)

In the test, male broilers were used. Sixteen broilers were allocated to each group (replicate), and the number of replicates in each test section was seven.

### (Test Period)

The test period was set from 0 to 42 days of age of the broilers.

### (Test Section)

Six test sections as listed in Table 4 were established. The test period was divided into the early term from 0 to 7 days of age, the mid term from 8 to 21 days of age, and the later term from 22 to 42 days of age, and in each term, the broilers were fed with the livestock feed specified in Table 4.

**[Table 4]**

| Test section | Type of livestock feed | | | Components contained in livestock feed other than basic feed |
|---|---|---|---|---|
| | Early term (0 to 7 days of age) | Mid term (8 to 21 days of age) | Later term (22 to 42 days of age) | |
| 1 | (1-1) | (2-1) | (3-1) | DLM |
| 2 | (1-2) | (2-2) | (3-2) | LMA |
| 3 | (1-3) | (2-3) | (3-3) | DLM, GAA |
| 4 | (1-4) | (2-4) | (3-4) | LMA, GAA |
| 5 | (1-5) | (2-5) | (3-5) | DLM, LMA |
| 6 | (1-6) | (2-6) | (3-6) | DLM, LMA, GAA |

### (Evaluation)

After the completion of the test, for each test section, the weight gain of the broilers which was (Test-period body weight increment)=(Post-test body weight) - (Pre-test body weight) and the feed conversion ratio which was (Test-period feed intake)/(Test-period weight gain) were calculated and averaged. Results are shown in Table 5.

**[Table 5]**

| Test section | Components contained in livestock feed other than basic feed | Weight gain [g] | Feed conversion ratio |
|---|---|---|---|
| 1 | DLM | 3,046 | 1.53 |
| 2 | LMA | 3,083 | 1.53 |
| 3 | DLM, GAA | 3,083 | 1.53 |
| 4 | LMA, GAA | 3,079 | 1.54 |
| 5 | DLM, LMA | 3,085 | 1.55 |
| 6 | DLM, LMA, GAA | 3,176 | 1.51 |

As shown above, Test Section 6 where the broilers were fed with the livestock feed that included the basic feed as well as LMA, DLM, and GAA exhibited improvement in the weight gain and the feed conversion ratio, as compared with the other test sections, namely Test Sections 1 to 5.

### [Test Example 2]

### [Preparation of Basic Feed]

Raw materials were blended as specified in Table 6 to prepare basic feeds (4) to (6).

**[Table 6]**

| Feed raw material | Basic feed (4) [mass%] | Basic feed (5) [mass%] | Basic feed (6) [mass%] |
|---|---|---|---|
| Flaked corn | 52.11 | 55.00 | 58.93 |
| Soybean meal | 39.00 | 35.50 | 31.00 |
| Corn gluten meal | 0.90 | 0.80 | 0.70 |
| Fish meal (crude protein (CP) 65%) | 1.90 | 1.80 | 1.70 |
| Vegetable oil/fat | 3.00 | 4.00 | 5.00 |
| Tricalcium phosphate | 1.36 | 1.36 | 1.20 |
| Calcium carbonate | 0.79 | 0.79 | 0.72 |
| Common salt | 0.20 | 0.20 | 0.30 |
| Vitamins/minerals premix*¹ | 0.30 | 0.30 | 0.25 |
| Choline chloride (60% preparation) | 0.08 | 0.08 | 0.08 |
| L-Lysine hydrochloride | 0.20 | 0.12 | 0.10 |
| L-Threonine | 0.07 | 0.05 | 0.02 |
| L-Arginine | 0.06 | 0.00 | 0.00 |
| L-Valine | 0.3 | 0.00 | 0.00 |
| Total | 100.00 | 100.00 | 100.00 |

| | | | |
|---|---|---|---|
| *1: Thiamine nitrate in 2.0 g/kg, riboflavin in 4.5 g/kg, pyridoxine hydrochloride in 2.0 g/kg, cyanocobalamine in 10.0 mg/kg, nicotinic acid in 30.0 g/kg, calcium D-pantothenate in 7.5 g/kg, d-biotin in 75.0 mg/kg, folic acid in 1.0 g/kg, vitamin A in 6,500,000 IU, vitamin D₃ in 2,500,000 IU, dl-α-tocopherol acetate in 40 mg/kg, vitamin K₃ in 3.836 g/kg, Mn in 50 g/kg, Zn in 50 g/kg, Fe in 20 g/kg, Cu in 7.5 g/kg, I in 0.5 g/kg | | | |

Metabolizable energy calculated from the component composition of the basic feeds (4) to (6), together with the contents of the components, are shown in Table 7 (calculated according to Standard Tables of Feed Composition in Japan (2009)). Table 7 also shows the ratio of the calculated metabolizable energy as well as the contents of the components to the requirements for broilers (Ross Nutrition Specification 2019).

**[Table 7]**

| Component | Basic feed (4) | | Basic feed (5) | | Basic feed (6) | |
|---|---|---|---|---|---|---|
| | Calculated value | Ratio vs. requirements [%] | Calculated value | Ratio vs. requirements [%] | Calculated value | Ratio vs. requirements [%] |
| Metabolizable energy [Mcal/kg] | 3021 | 101 | 3109 | 100 | 3212 | 100 |
| Crude protein [%] | 23.26 | 101 | 23 21.53 | 100 | 19.62 | 101 |
| Calcium [%] | 0.96 | 100 | 0.94 | 108 | 0.85 | 109 |
| Non-phytate phosphorus [%] | 0.48 | 100 | 0.47 | 108 | 0.42 | 108 |
| Methionine [%] | 0.36 | 64 | 0.34 | 67 | 0.31 | 66 |
| Digestable methionine [%] | 0.33 | 63 | 0.31 | 66 | 0.29 | 67 |
| Methionine + cystine [%] | 0.72 | 67 | 0.68 | 69 | 0.63 | 70 |
| Digestable methionine + cystine [%] | 0.63 | 66 | 0.60 | 69 | 0.55 | 69 |
| Digestable arginine [%] | 1.40 | 102 | 1.24 | 101 | 1.12 | 103 |
| Digestable isoleucine [%] | 0.87 | 101 | 0.81 | 104 | 0.73 | 104 |
| Digestable leucine [%] | 1.81 | 128 | 1.71 | 135 | 1.59 | 142 |
| Digestable lysine [%] | 1.30 | 102 | 1.15 | 100 | 1.03 | 101 |
| Digestable threonine [%] | 0.86 | 100 | 0.79 | 103 | 0.69 | 101 |
| Digestable tryptophan [%] | 0.25 | 125 | 0.23 | 128 | 0.21 | 138 |
| Digestable valine [%] | 0.98 | 102 | 0.89 | 102 | 0.81 | 104 |

### [Preparation of Feed Additive]

DLM, LMA, GAA, and the carrier were used in the proportion specified in Table 8 to obtain respective feed additives. More specifically, for preparing a present feed additive for production of 1,000 kg of a livestock feed (4-1), 4.8 kg of diatomaceous earth was placed in a vessel of a universal mixer/stirrer "30DM-rr", and while it was stirred at 68 revolutions/minute, 1.7 kg of LMA was added to the vessel by a small amount at a time, followed by stirring for 5 minutes for sufficient impregnation of the diatomaceous earth with LMA and then a pause to check the state of impregnation. Then, 1.5 kg of DLM and 0.6 kg of GAA were added to the vessel, stirred for another 5 minutes, and thereby 8.6 kg in total of the present feed additive was obtained. Present feed additives to be mixed with livestock feeds (4-2) to (6-3), respectively, were also obtained in the same manner.

### [Preparation of Livestock Feed]

The present feed additives thus prepared and the basic feeds (4) to (6) were mixed together in the proportion specified in Table 8 to prepare respective livestock feeds. The total content of DLM and LMA in the livestock feed was determined to be 98 to 100% of the total requirements of methionine and cystine for broilers (given in the row named "Digestable methionine + cystine" in Table 7). For example, when 1,000 kg of the livestock feed (4-1) was required, 991.4 kg of the basic feed (4) was placed in a tank of a ribbon mixer (RM-300, manufactured by Fuji Electric Co., Ltd.), and while it was mixed at a predetermined number of revolutions, 8.6 kg of the feed additive obtained in the above-mentioned manner was added thereto, followed by another 10 minutes of mixing, and thereby 1,000 kg of the livestock feed (4-1) was obtained. Each of the other livestock feeds was also obtained in a desired amount by mixing in the same manner.

**[Table 8]**

| Livestock feed | Basic feed | | DLM | LMA | GAA | Carrier | | Total |
|---|---|---|---|---|---|---|---|---|
| | Type | Amount [mass%] | Amount [mass%] | Amount [mass%] | Amount [mass%] | Type | Amount [mass%] | [mass%] |
| (4-1) | (4) | 99.14 | 0.15 | 0.17 | 0.06 | Diatomaceous earth | 0.48 | 100 |
| (4-2) | (4) | 98.96 | 0.15 | 0.17 | 0.06 | Zeolite | 0.66 | 100 |
| (4-3) | (4) | 98.54 | 0.15 | 0.17 | 0.06 | Perlite | 1.08 | 100 |
| (5-1) | (5) | 99.22 | 0.14 | 0.15 | 0.06 | Diatomaceous earth | 0.43 | 100 |
| (5-2) | (5) | 99.06 | 0.14 | 0.15 | 0.06 | Zeolite | 0.60 | 100 |
| (5-3) | (5) | 98.68 | 0.14 | 0.15 | 0.06 | Perlite | 0.97 | 100 |
| (6-1) | (6) | 99.30 | 0.12 | 0.14 | 0.06 | Diatomaceous earth | 0.39 | 100 |
| (6-2) | (6) | 99.15 | 0.12 | 0.14 | 0.06 | Zeolite | 0.53 | 100 |
| (6-3) | (6) | 98.82 | 0.12 | 0.14 | 0.06 | Perlite | 0.86 | 100 |

### (Test Animal)

In the test, male broilers were used. Ten broilers were allocated to each group (replicate), and the number of replicates in each test section was four.

### (Test Period)

The test period was set from 0 to 42 days of age of the broilers.

### (Test Section)

Three test sections as listed in Table 9 were established. The test period was divided into the early term from 0 to 7 days of age, the mid term from 8 to 21 days of age, and the later term from 22 to 42 days of age, and in each term, the broilers were fed with the livestock feed specified in Table 9.

**[Table 9]**

| Test section | Type of livestock feed | | | Components contained in livestock feed other than basic feed |
|---|---|---|---|---|
| | Early term (0 to 7 days of age) | Mid term (8 to 21 days of age) | Later term (22 to 42 days of age) | |
| 7 | (4-1) | (5-1) | (6-1) | DLM, LMA, GAA, Diatomaceous earth |
| 8 | (4-2) | (5-2) | (6-2) | DLM, LMA, GAA, Zeolite |
| 9 | (4-3) | (5-3) | (6-3) | DLM, LMA, GAA, Perlite |

### (Evaluation)

After the completion of the test, for each test section, the weight gain of the broilers which was (Test-period body weight increment)=(Post-test body weight)-(Pre-test body weight) and the feed conversion ratio which was (Test-period feed intake)/(Test-period weight gain) were calculated and averaged. Results are shown in Table 10.

**[Table 10]**

| Test section | Components contained in livestock feed other than basic feed | Weight gain [g] | Feed conversion ratio |
|---|---|---|---|
| 7 | DLM, LMA, GAA, Diatomaceous earth | 2,805 | 1.52 |
| 8 | DLM, LMA, GAA, Zeolite | 2, 896 | 1. 48 |
| 9 | DLM, LMA, GAA, Perlite | 2,890 | 1.50 |

As seen in Table 10, Test Section 8 in which zeolite was used gave the best results.

Besides the above, compositions as specified in Table 11 and Table 12 can also be adopted to prepare feed additives. The resulting feed additives can be mixed with the livestock feed in the same manner as mentioned above and can be fed to livestock, to improve the weight gain and the feed conversion ratio.

**[Table 11]**

| | #1 | #2 | #3 | #4 | #5 | #6 | #7 | #8 |
|---|---|---|---|---|---|---|---|---|
| DLM (as active ingredient) | 15.0 | 23.0 | 30.0 | 20.0 | 12.0 | 15.0 | 18.0 | 14.0 |
| LMA (as active ingredient) | 15.0 | 23.0 | 30.0 | 20.0 | 12.0 | 15.0 | 18.0 | 14.0 |
| GAA (as active ingredient) | 6.0 | 9.2 | 12.0 | 20.0 | 4.8 | 6.0 | 7.2 | 14.0 |
| Diatomaceous earth | Balance | Balance | Balance | Balance | - | - | - | - |
| Zeolite | - | - | - | - | Balance | Balance | Balance | Balance |
| Total [mass%] | 100.0 | 100.0 | 100.0 | 100.0 | 100.0 | 100.0 | 100.0 | 100.0 |

**[Table 12]**

| | #9 | #10 | #11 | #12 | #13 | #14 |
|---|---|---|---|---|---|---|
| DLM (as active ingredient) | 10.0 | 15.0 | 13.0 | 20.0 | 35.0 | 25.0 |
| LMA (as active ingredient) | 10.0 | 15.0 | 13.0 | 20.0 | 35.0 | 25.0 |
| GAA (as active ingredient) | 4.0 | 6.0 | 13.0 | 8.0 | 14.0 | 25.0 |
| Perlite | Balance | Balance | Balance | - | - | - |
| Hydrous silicon dioxide | - | - | - | Balance | Balance | Balance |
| Total [mass%] | 100.0 | 100.0 | 100.0 | 100.0 | 100.0 | 100.0 |

## Claims

1. A feed additive comprising:
a methionine hydroxy analog and/or a calcium salt thereof;
methionine and/or a salt thereof; and
guanidinoacetic acid and/or a salt thereof.

2. The feed additive according to claim 1, further comprising a carrier.

3. The feed additive according to claim 2, wherein
the carrier includes a solid carrier, and
the solid carrier supports the methionine hydroxy analog.

4. A livestock feed comprising:
a methionine hydroxy analog and/or a calcium salt thereof;
methionine and/or a salt thereof;
guanidinoacetic acid and/or a salt thereof; and
a basic feed.

5. The livestock feed according to claim 4, further comprising a carrier.

6. The livestock feed according to claim 5, wherein
the carrier includes a solid carrier, and
the solid carrier supports the methionine hydroxy analog.

7. A method of rearing livestock, comprising feeding livestock with the livestock feed according to any one of claims 4 to 6.

8. The method of rearing according to claim 7, wherein the livestock are poultry.

9. A method of improving a weight gain and a feed conversion ratio in livestock, the method comprising feeding livestock with the livestock feed according to any one of claims 4 to 6.

10. The method according to claim 9, wherein the livestock are poultry.
